(19) **Europäisches Patentamt**
**European Patent Office**
**Office européen des brevets**

(11) Veröffentlichungsnummer : **0 327 541 B1**

(12) # EUROPÄISCHE PATENTSCHRIFT

(45) Veröffentlichungstag der Patentschrift :
25.09.91 Patentblatt 91/39

(51) Int. Cl.$^5$ : **G07C 9/00, G07B 15/04,**
**G07F 7/08**

(21) Anmeldenummer : **87906556.3**

(22) Anmeldetag : **16.10.87**

(86) Internationale Anmeldenummer :
**PCT/AT87/00060**

(87) Internationale Veröffentlichungsnummer :
**WO 88/03296 05.05.88 Gazette 88/10**

(54) **EINRICHTUNG ZUR MASCHINELLEN KOMMUNIKATION BEI DER ÜBERTRAGUNG VON DATEN.**

(30) Priorität : **23.10.86 AT 2820/86**
**23.10.86 AT 2819/86**
**23.10.86 AT 2818/86**

(43) Veröffentlichungstag der Anmeldung :
**16.08.89 Patentblatt 89/33**

(45) Bekanntmachung des Hinweises auf die
Patenterteilung :
**25.09.91 Patentblatt 91/39**

(84) Benannte Vertragsstaaten :
**AT BE CH DE FR GB IT LI LU NL SE**

(56) Entgegenhaltungen :
**EP-A- 0 040 544**
**EP-A- 0 057 602**
**EP-A- 0 061 373**
**EP-A- 0 198 642**
**CA-A- 1 184 658**

(56) Entgegenhaltungen :
**GB-A- 2 151 987**
**GB-A- 2 164 825**
**US-A- 3 806 874**
**US-A- 4 325 146**
**US-A- 4 338 587**

(73) Patentinhaber : **Skidata Computer**
**Gesellschaft m.b.H.**
**Berchtesgadner Strasse 8**
**A-5083 Gartenau - St. Leonhard (AT)**

(72) Erfinder : **KOCZNAR, Wolfram**
**Lehmweg 16a**
**A-6020 Innsbruck (AT)**
Erfinder : **WALLERSTORFER, Kurt**
**Irrsdorf 130**
**A-5204 Strasswalchen (AT)**

(74) Vertreter : **Torggler, Paul, Dr. et al**
**Patentanwälte Dr. Paul Torggler DDr.**
**Engelbert Hofinger Wilhelm-Greil-Strasse 16**
**A-6020 Innsbruck (AT)**

## Beschreibung

Die Erfindung betrifft einen Datenträger zum berührungslosen, distanzierten Datenverkehr mit mindestens einer Kontrollstation, die in einem Erfassungsraum eine Überprüfung und/oder Änderung der Daten im Datenträger vornimmt, insbesondere bei der Kentrolle einer Zutrittsberechtigung, wobei der Datenträger mit Befestigungsmitteln zur Verbindung mit dem Inhaber des Datenträgers versehen ist, und einen Mikroprozessor, eine Stromquelle, eine Datensendeempfangseinheit, einen Speicher, der insbesondere zur Aufnahme mehrerer, unabhängiger Berechtigungen, Werte und Identifikätionsinformationen ausgebildet ist, eine Bedienungstaste, ein elektronisches Uhrwerk, eine Zeitanzeige, sowie gegebenenfalls eine Bereitschaftsschaltung umfaßt, die über ein von der Kontrollstation abgegebenes Signal aktivierbar ist.

Ein derartiger Datenträger ist beispielsweise der US-A-3806874 zu entnehmen. Er dient insbesondere als Indentifizierungsmittel seines Trägers bzw. Benützers, ebenso für den Nachweis einer oder mehrerer Zutrittsberechtigungen zu Sicherheitseinrichtungen oder bestimmten Organisationen, einer oder mehrerer Zugriffsberechtigungen zu Bankkonten, usw. wobei ein Maximum an Fälschungssicherheit dadurch erreicht werden soll, daß im enthaltenen Chiffrierrechner von einem elektronischen Uhrwerk erzeugte Zeitinformationen mitverarbeitet werden, wobei vorzugsweise auch noch die Eingabe einer individuellen Personalnummer erforderlich ist. Der Datenträger ist bevorzugt mit einem Armband versehen und kann am Handgelenk getragen werden. Dem enthaltenen elektronischen Uhrwerk kann dabei auch eine Analoganzeige zugeordnet sein, sodaß der Datenträger auch als Armanduhr mit Anzeige der Tageszeit verwendbar ist. Die Anzeige des Speicherinhalts ist, da Sicherheitsaspekte im Vordergrund stehen, nicht möglich. Aus der EP-A-61 373 ist ein Datenträger bekannt geworden, der als Fahrkarte, Wertkarte, Mautkarte od.dgl., insbesondere als Schipaß für Wintersportzentren, verwendet wird. Dabei wird beim Kauf des Datenträgers eine entsprechende Anzahl von Benützungsberechtigungen oder eine entsprechende Gültigkeitsdauer in den Speicher des Datenträgers eingelesen. Der Datenträger beinhaltet Zeitgeber und Schieberegister, und die Daten werden bei der Initialisierung taktweise eingelesen, und bei jeder Kontrolle über die Kontrollstation taktweise zirkuliert. Der Datenträger ist mit einem Armband versehen, sodaß er ebenfalls am Handgelenk getragen werden kann. Zur Anzeige des Speicherinhaltes sind eine Bedienungstaste und ein digitales Display vorgesehen, sodaß auch für den Benützer bzw. Träger die Gültigkeit bzw. deren Ablauf jederzeit ersichtlich gemacht werden kann. Die Verwendung als Uhr mit Anzeige der Tageszeit ist nicht vorgesehen.

Es ist nun Aufgabe der Erfindung, einen Datenträger zu schaffen, der auch Anwendungsfällen gerecht wird, in denen für den Benützer sowohl Speicherinhalts- als auch Zeitinformationen von Vorteil sind und der einen erhöhten Verwendungskomfort bietet.

Erfindungsgemäß wird nun bei einem Datenträger der eingangs genannten Art, diese Aufgabe dadurch gelöst, daß der Datenträger ein Digitaldisplay aufweist und die Bedienungstaste zur wahlweisen Anzeige des Speicherinhaltes oder der Tageszeit auf dem Digitaldisplay geeignet ist.

Durch diese Ausbildung können durch Betätigung der Bedienungstaste Speicherinhalts- oder Zeitdaten abgelesen werden, wobei mehrere verschiedene Speicherinhaltsdaten automatisch nach Ablauf einer gewissen Zeit oder durch mehrmaliges Drücken angezeigt werden.

Die Anwendungsmöglichkeiten des erfindungsgemäßen Datenträgers sind aufgrund der wählbaren Speicherinhalts- oder Tageszeitanzeige mannigfaltig. Neben der einfachen Verwendung als einmalige Fahrkarte oder Eintrittskarte ist seine wiederholte Verwendung als Jahreskarte, Dauerausweis für sich wiederholende Veranstaltungen ebenso möglich, wie als Wertkarte, von der beliebige Beträge fortlaufend abgebucht werden, bis ein dem Kaufpreis entsprechender "Vorrat" aufgebraucht ist. In diesem Fall bildet der Datenträger eine Mehrfaktenkarte, eine Eintrittskarte für Veranstaltungen mit verschiedenen Konsummöglichkeiten (Gastgewerbe, Vergnügungs- und Freizeitanlagen, usw.).

In der einfachen Anwendung als einmalige Fahrkarte, beispielsweise als Tageskarte für ein Schigebiet, stellt etwa die wahlweise anzeigbare Tageszeit eine Entscheidungshilfe für die Einteilung des Leistungskonsums innerhalb der Liftöffnungszeiten dar. Ebenfalls von Vorteil ist die Zeitanzeige bei der Mehrfahrtenkarte, bei der auf dem Display eine Restwertanzeige sichtbar gemacht werden kann, um beispielsweise nach der vorletzten Fahrt eine rechtzeitige Wiederaufwertung in einer Initialisierungsstation einplanen zu können.

Aufgrund der im Datenträger enthaltenen Sende-Empfangseinheit wird eine bequeme zeitsparende Fernkontrolle erreicht, da der Datenträger bewußt und gewollt in einen beschränkten Kommunikationsraum der Sende-Empfangseinheit der Kontrollstation gebracht, jedoch nicht exakt positioniert werden muß. Hier wird in einer sehr kurzen Zeitspanne, vorzugsweise unter 1 Sekunde, die Berechtigung und/oder die Gültigkeit der Berechtigung überprüft, und/oder Änderungen im Speicherinhalt durchgeführt. Damit wird der Durchgang durch die Kontrollstation wesentlich beschleunigt und Wartezeiten werden reduziert. Diese Zeitersparnis wird beispielsweise bei Autobahnmautstellen oder Schiliften besonders augenscheinlich. Da eine Anzeige auf dem Display nur über die Betätigung der Bedienungstaste erfolgt und vorteilhaft auch eine Bereitschaftsschaltung vorliegt, die über ein von der Kontrollstation und/oder der Initialisierungsstation abgegebenes Signal aktivierbar ist, ist auch ein minimaler Energieverbrauch gegeben, sodaß eine mehrjährige Verwendungsdauer als erneuerbare Saison- oder Jahreskarte auch bei oftmaliger Benützung erreichbar ist.

Die Initialisierungsstation kann die erste und die neuerliche Eingabe der Daten, die Aktivierung der Bereitschaftsschaltung und gegebenenfalls auch die Übertragung von Energie auch induktiv durchführen, wenn sie und der Datenträger entsprechende Übertragungselemente enthalten. Diese sind dann im Datenträger zusätzlich zu der Sende-Empfangseinheit vorgesehen.

Vor allem für die Verwendung als Fahrkarte oder Eintrittskarte ist es günstig, wenn der Datenträger eine Vorrichtung zur Aufnahme eines Bildes des Inhabers umfaßt. Hiebei ist bevorzugt vorgesehen, daß die Vorrichtung eine transparente Abdeckung aufweist, die innenseitig mit einer Klebstoffbeschichtung versehen ist, auf die als Bild ein Foto aufklebbar ist. Damit kann der unbefugte Austausch des Fotos unterbunden werden.

In einer weiteren bevorzugten Ausführung ist vorgesehen, daß eine individuelle, visuell lesbare Nummer am einzusetzenden Foto sowie an einem mit dem Speicher verbundenen Teil eingeprägt oder aufgedruckt und vorzugsweise auch in den Speicher eingelesen ist. Mit Hilfe der visuell lesbaren Nummer läßt sich in der Initialisierungsstation ein Journal führen, um bei einem eventuellen Verlust der gespeicherten Daten oder des Datenträgers ein Doppel ausstellen zu können. Hiezu wird in der Initialisierungsstation und bevorzugt auch im Datenträger die jedem Datenträger zugeordnete individuelle Nummer mit den dazugehörigen, an den Datenträger übertragenen Daten abgespeichert. Durch Abruf der Nummer können dann die jeweiligen Daten ermittelt werden. Eine bevorzugte Ausführung sieht vor, daß der Datenträger eine ein Gehäuse aufweisende Armbanduhr bildet, an dem ein Armband als Befestigungsmittel vorgesehen ist. Die Befestigungsmittel richten sich natürlich nach dem Verwendungszweck ; so ist in einer Variante vorgesehen, daß als Befestigungsmittel eine federbeaufschlagte Schnur vorgesehen ist, die im Gehäuse ausziehbar aufgewickelt ist, und an deren Ende ein Schlüsselring oder dergleichen befestigt ist. Befestigungsmittel in Form einer Ansteckklammer, einer Selbstklebebeschichtung, eines Autoschlüsselanhängers usw. sind ebenfalls denkbar. Die beiden letzten Ausbildungen eignen sich vor allem für die Verwendung mit Kraftfahrzeugen, wenn der Datenträger etwa eine möglichst unverlierbar dem Fahrzeug zugeordnete Mautkarte oder eine Parkgaragenkarte darstellt. Vorteilhaft ist das Gehäuse aus einem Oberteil und einem Unterteil unlösbar zusammengesetzt, wobei die Befestigungsmittel am Unterteil vorgesehen sind.

Nachstehend wird nun die Erfindung an Hand der Figuren der beiliegenden Zeichnungen näher beschrieben, ohne darauf beschränkt zu sein.

Es zeigen :

Fig. 1   schematisch das Zusammenwirken eines erfindungsgemäßen Datenträgers mit einer Kontrollstation,

Fig. 2   eine erste Ausführung einer Kontrollstation im schematischen Teilschnitt,

Fig. 3   eine erste Ausführung eines Datenträgers zur Kommunikation mit der Kontrollstation nach Fig. 2,

Fig. 4   ein Blockschaltbild der Kontrollstation nach Fig. 2,

Fig. 5   ein Blockschaltbild des Datenträgers nach Fig. 3,

Fig. 6   zeigt eine Draufsicht auf eine zweite Ausführung eines Datenträgers,

Fig. 7   einen Längsschnitt durch den Datenträger nach Fig. 6,

Fig. 8   ein Blockschaltbild des Datenträgers nach Fig. 6,

Fig. 9   eine Schrägansicht einer dritten Ausführung des Datenträgers,

Fig. 10   einen Längsschnitt durch eine vierte Ausführung des Datenträgers,

Fig. 11   einen schematischen Schnitt durch eine zweite Ausführung einer Kontrollstation für die zur Kommunikation mit einem Datenträger gemäß Fig. 6-8,

Fig. 12   eine zweispurige Kontrollanlage mit Sperren, und

Fig. 13   eine schematische Anordnung einer Initialisierungsstation.

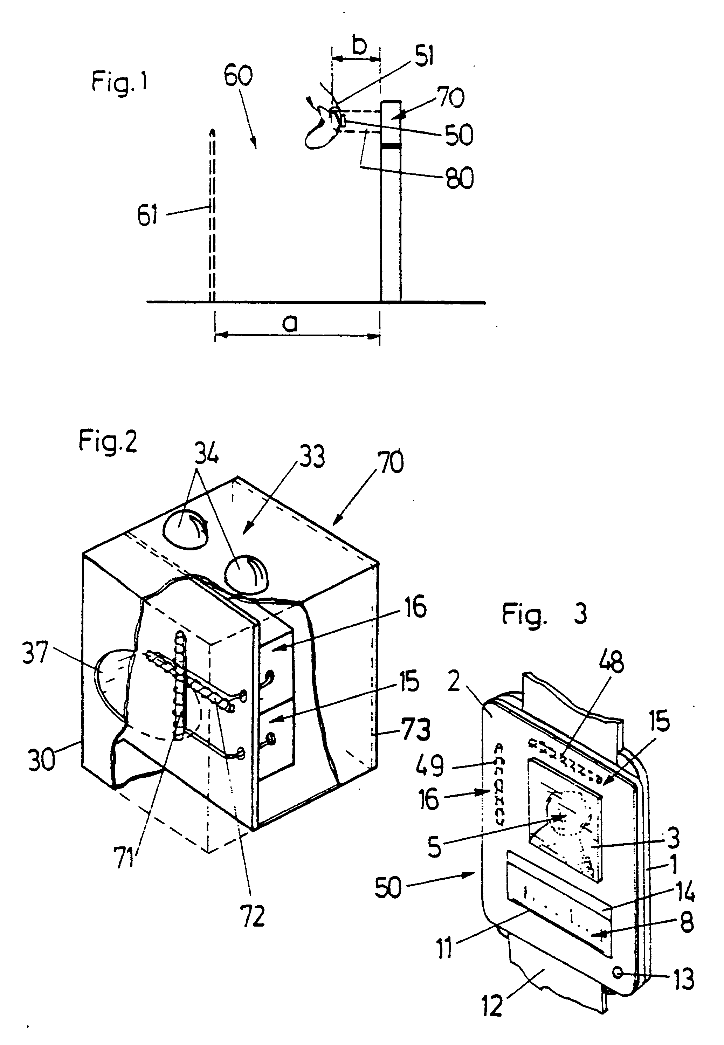

Ein Datenträger 50 dient der berührungslosen Kommunikation mit einer Kontrollstation 70 (Fig. 1), wobei ein Umfeld 80 der Kontrollstation 70 den Kommunikationsraum bildet. Dieses Umfeld 80 liegt innerhalb eines eine körperliche oder auch nur gedachte Begrenzung 61 aufweisenden Erfassungsraumes 60, der in seinen Dimensionen auf das mit dem Datenträger 50 versehene Objekt 51 (Person oder Gegenstand) abgestimmt ist. So kann der Erfassungsraum 60 beispielsweise eine Personendurchgangsspur mit der Größe a bilden, um die die Begrenzung 61 von der Kontrollstation 70 distanziert ist. Da das Umfeld 80 eine maximale Erstreckung b aufweist, die wesentlich kleiner als die Größe a des Erfassungsraumes ist, muß für die Datenübertragung der Datenträger 50 ins Umfeld 80 der Kontrollstation 70 gebracht werden. Dieses bedeutet somit eine Annäherung des Objektes 51 an die Kontrollstation 70 in einem Ausmaß, daß eine Störung der Kommunikation durch einen zufällig oder auch absichtlich im Erfassungsraum 60 anwesenden anderen Datenträger praktisch ausgeschlossen ist. Liegt das Maß a beispielsweise bei 50 oder 70 cm, so wird eine geeignete maximale Erstreckung b des Umfeldes 80 etwa 10 bis 30 cm betragen.

In der in den Fig. 2 bis 5 gezeigten Ausführung erfolgt die Übertragung der Daten mittels Funk, wobei die erwähnte geringe Erstreckung b vor allem durch eine geringe Sendeenergie und geeignete Antennenausbildung erzielt werden kann. Die Sende-Empfangsfrequenzen liegen vorzugsweise in einem Bereich bis 250 kHz. Dadurch können auch magnetische Antennen für Sender 15 und Empfänger 16 verwendet werden, sodaß keine unerwünschten Abschirmeffekte auftreten.

Wie aus Fig. 2 und 3 ersichtlich, sind die Sendeantennen 71, 48 und die Empfangsantenne 72, 49 sowohl im Gehäuse 30 der Kontrollstation 70 (Fig. 2) als auch im Datenträger 50 (Fig. 3) um 90° gegeneinander versetzt, sodaß sie sich magnetisch nicht zu stark beeinflussen. Auf Grund der geringen Erstreckung b des Kommunikationsraumes erübrigt sich im allgemeinen die Ausbildung richtungsunabhängiger Antennen. Es wäre aber durchaus denkbar, zwei gegeneinander versetzte Empfangsspulen 72, 49 in der Kontrollstation 70 und-/oder im Datenträger 50 vorzusehen. Rückseitig ist das Gehäuse 30 mit einer Abschirmung 73 versehen.

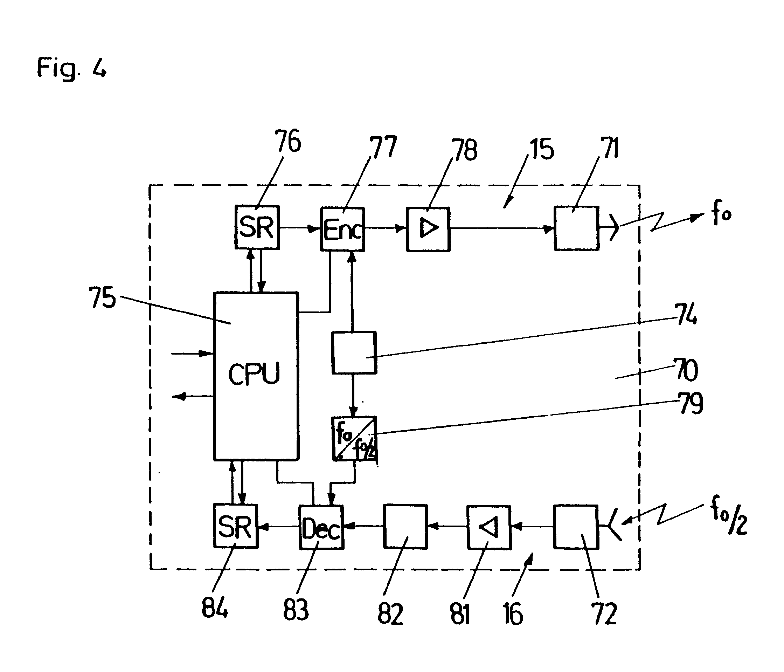

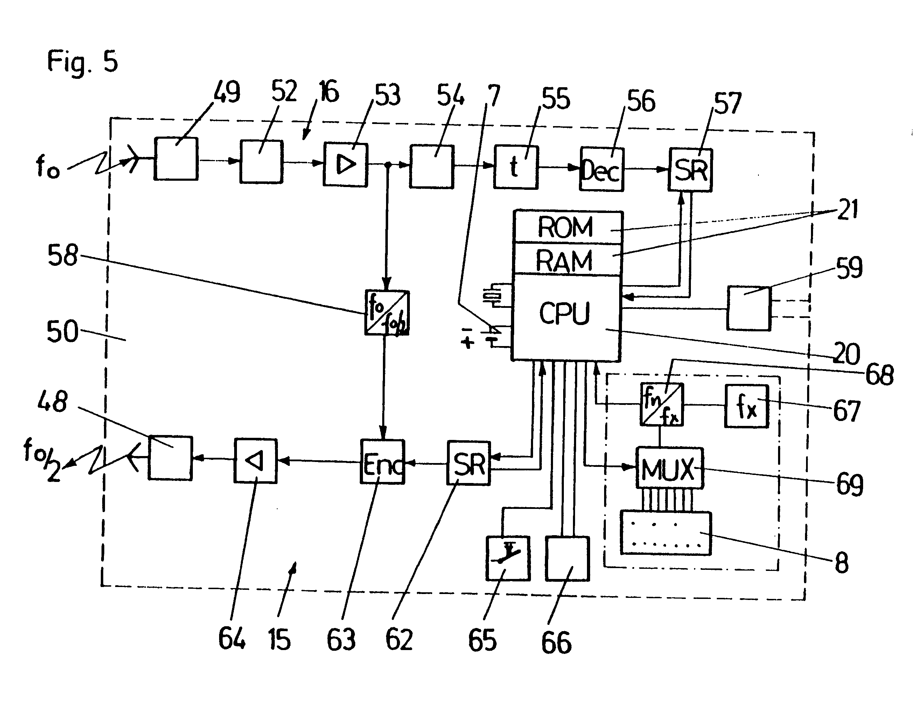

Anhand der beiden in den Fig. 4 und 5 gezeigten Blockschaltbilder der Kontrollstation 70 und des Datenträgers 50 wird nachstehend die Kommunikation zwischen der Kontrollstation 70 und dem ins Umfeld 80 angenäherten Datenträger 50 näher erläutert.

Die Kontrollstation 70 sendet mit einer Trägerfrequenz fo (2.8.100 kHz) eine Kennummer aus. (Fig. 4) Hiezu überträgt die Zentraleinheit 75 (CPU) der Kontrollstation entsprechende Daten in ein Schieberegister 76 (SR), aus welchem diese seriell in einem Encoder 77 ausgelesen werden. Der Encoder 77 ist mit einem Oszillator 74 für die Trägerfrequenz fo verbunden. Über entsprechende Verstärker 78 wird die Sendeantenne 71 betrieben. Die von der Kontrollstation 70 abgegebenen Signale werden (Fig. 5) im Datenträger 50 von der auf die Trägerfrequenz fo abgestimmten Empfangsantenne 49 empfangen. Über einen Begrenzer 52 und einen Verstärker 53 werden die Signale einem Tiefpaß 54 zugeführt, der wiederum mit einem Decoder 56 verbunden ist.

Zwischen dem Tiefpaß 54 und dem Decoder 56 ist ein Zeitglied 55 (t) angeordnet, welches verhindert, daß zufällig empfangene Signale den Prozessor 20 (CPU) im Datenträger 50 'aufwecken'.

Der Decoder 56 übergibt die decodierte Daten einem Schieberegister 57 (SR), welches über einen Interrupt den Prozessor 20 aufweckt, sodaß dieser die empfangene Leserkennung übernehmen kann.

Der Prozessor 20 rechnet die Leserkennung mit einem festgelegten Algorithmus um, und sendet nun seinerseits zusätzlich eine eigene Datenträgernummer zur Kontrollstation 70 retour. Zum Sendeverkehr vom Datenträger 50 zur Kontrollstation 70 benötigt der Datenträger 50 die Trägerfrequenz fo. Diese wird über einen Frequenzteiler 58 (fo/$\frac{fo}{2}$) einem Encoder 63 zugeführt, welcher die entsprechenden Daten über ein Schieberegister 62 (SR) vom Prozessor 20 erhält. Die Sendefrequenz beträgt nun fo/2. Diese Schaltung hat den Vorteil, daß im Datenträger 50 kein eigener, konstanter Oszillator benötigt wird, der auf die Kontrollstation 70 abzustimmen ist. Die Signale gelangen über einen Verstärker 64 und Sendeantenne 48 des Datenträgers 50 zur Empfangsantenne 72 der Kontrollstation 70. Von dort werden sie über einen Verstärker 81 und einen Tiefpaß 82 einem Decoder 83 zugeführt.

Vom Decoder gelangen die Daten in ein Schieberegister 84 zur Zentraleinheit 75. Diese rechnet die empfangenen Daten mit demselben Algorithmus wie die Datenträger 50 um und kann so etwaige Manipulationsversuche erkennen, wobei dem Sendeoszillator 74 ein Frequenzteiler 79 zugeordnet ist. Die vom Datenträger 50 kommende gleiche Sendefrequenz fo/2 kann somit direkt verglichen werden.

Wird beispielsweise entweder die Kontrollstation 70 oder insbesondere der Datenträger 50 durch eine Fälschung simuliert, so kann der jeweilige, echte Partner nach einer bestimmten Anzahl von Übertragungsversuchen die Datenübertragung für bestimmte Zeit oder auf Dauer unterbrechen.

Nach diesem ersten Datenverkehr sind die Kontrollstation 70 und der Datenträger 50 gegenseitig erkannt, wobei zugleich eine Überprüfung der Echtheit beider Partner stattgefunden hat, sodaß der eigentliche Datenverkehr erfolgen kann, der von der konkreten Anwendung abhängig ist. Nach Abschluß dieser Datenübermittlung schaltet sich die Kontrollstation 70 für den nächsten Anwendungsfall frei und ruft wieder mit seiner Kennung bis die nächste Antwort von einem folgenden Datenträger 50 empfangen wird.

Wie bereits erwähnt, befindet sich der Prozessor 20 des Datenträgers normalerweise im Schlaf-Modus, also einer inaktiven Betriebsart mit minimalem Stromverbrauch. Es tritt nur dann in Aktion, wenn gültige Daten empfangen werden.

Weiters ist es möglich, den Prozessor 20 über eingebaute Tasten 65 aufzuwecken, und beispielsweise den jeweiligen Status (Anzahl und Wert der eingespeicherten Berechtigungen), sowie die durchgeführten Transaktionen wahlweise zur Tageszeit auf dem Display anzuzeigen (Fig. 5).

Schließlich ist es noch möglich, eine Tastatur 66 beispielsweise für Rechenfunktionen, zur Eingabe einer persönlichen Identifizierungsnummer (PIN) ect. anzuschließen. Dadurch können bestimmte Aktionen von der Eingabe der Identifizierungsnummer abhängig gemacht werden.

Es ist auch vorgesehen, über eine serielle Schnittstelle 59 mit dem Prozessor 20 in Verbindung zu treten.

Der Datenträger 50 weist eine eigene Umschaltung auf, um im inaktiven Betrieb minimalen Stromverbrauch zu ermöglichen. Diese Schaltung besteht aus einem Uhrenoszillator 67, (fx), einem programmierbaren Teiler 68 (fn/fx) und einem Multiplexer 69 (MUX) für das LCD-Display 8. Programmgesteuert können Gangungenauigkeiten ausgeglichen werden.

Der Speicher des Prozessors 20 hat vorteil-haft einen relativ kleinen ROM-Bereich und einen relativ großen RAM-Bereich (z.B. 1kb und 4kb).

Im ROM werden nur die grundsätzlichen Routinen zur Bedienung der Peripherie— Module und zum Datenverkehr abgespeichert. Im RAM sind anwendungsspezifische Programme sowie alle Daten abgespeichert. Dadurch können Änderungen leicht durchgeführt werden und alle Transaktionen auch im nachhinein überprüft werden. Die beschriebenen Module des Datenträgers 50 sind mit Ausnahme der Quarze, des LCD-Displays 8 und der Sender/ Empfangsantennen 48, 49 sowie einigen Peripherie — Bausteine vorteilhaft in einem einzigen Chip integriert.

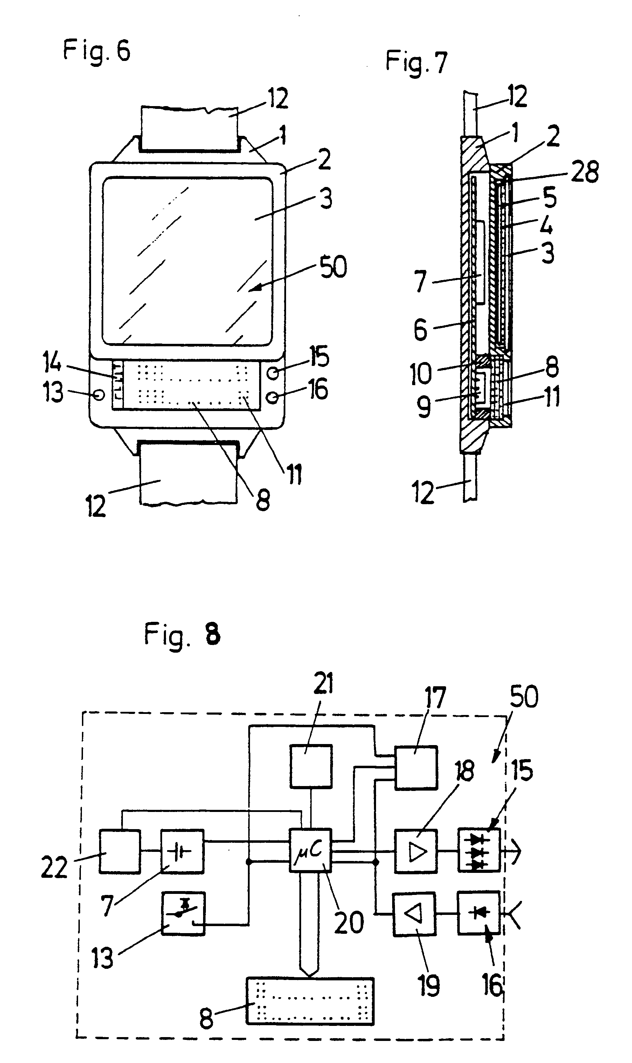

In den Fig. 6 bis 8 ist eine Ausführung eines Datenträgers für optische Datenübertragung, insbesondere mittels Infrarotwellen dargestellt.

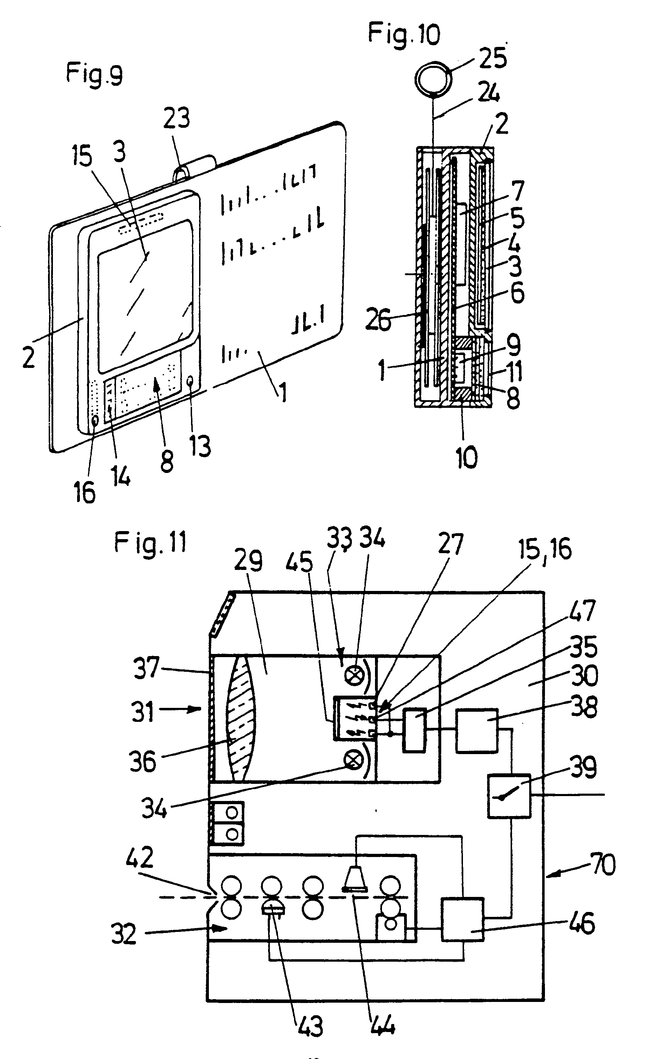

Die im Datenträger 50 enthaltene Elektronik ist im Blockschaltbild aus Fig. 8 ersichtlich. Der zentrale Mikroprozessor 20 (µC) ist mit Infrarotsendedioden als Sender 15 mit zugehöriger Sendelogik 18, mit einer Infrarotempfangsdiode als Empfänger 16 mit zugehöriger Empfangslogik 19, der eine Bereitschaftslogik 17 zugeordnet ist, und mit einer Stromquelle 7 verbunden, wobei die Stromquelle 7, vor allem, wenn sie durch eine Batterie gebildet ist, mit einer Kontrollogik 22 versehen ist. Die in den Datenträger 50 einzugebenden Daten werden in einen Schreib-Lese-Speicher 21, insbesondere einem EEPROM oder RAM gespeichert und können wahlweise mit der Tageszeit auf einen Flüssigkristalldisplay 8 durch Betätigung einer Taste 13 sichtbar gemacht werden. Die Stromquelle 7 kann auch eine aufladbare Batterie oder eine Solarzelle sein. In der Kontrollstation 70 sind korrespondierende Einrichtungen vorgesehen, die später beschrieben werden. Jeder Datenträger 50 weist ein Gehäuse auf, das aus einem Unterteil 1 und einem Oberteil 2 besteht (Fig. 3, 6, 7, 9, 10). Das Gehäuse ist insbeonsere aus Kunststoff, wobei die beiden Teile 1,2 vorzugsweise miteinander verschweißt sind. Der Unterteil 1 des Gehäuses kann dabei in verschiedenen Ausführungsformen vorliegen. Gemäß den Fig. 3, 6 und 7 sind am Unterteil 1 Aufnahmen für ein Armband 12 vorgesehen, sodaß der Datenträger 50 als Uhr am Unterarm oder Handgelenk (Objekt 51, Fig. 1) getragen werden kann. Fig. 9 zeigt einen vergrößerten, kartenförmigen Unterteil 1 mit einer Ansteckklammer 23, wobei hier auf dem Unterteil 1 noch ein zusätzliches Beschriftungsfeld vorliegen kann. Nach Fig. 10 ist das Gehäuse als Schlüsselanhänger ausgebildet, wobei im Unterteil 1 eine an einem Schlüsselring 25 befestigte Schnur 24 auf einer Federrolle 26 aufgewickelt ist. Der Unterteil 1 kann auch mit einer Selbstklebeschicht versehen sein. Die beiden-letztgenannten Ausführungen sind vor allem für Fahrzeuge gedacht (Parkgaragen, Mautstellen usw.). Der Oberteil 2 weist eine Fassung 28 für ein Foto 5 od.dgl.auf, die von einer Abdeckung 3 verschlossen ist. Die Abdeckung 3 trägt an der Innenseite eine Klebestoffbeschichtung 4, an der das Foto 5 angeklebt ist. Die Art des Klebestoffs ist dabei so gewählt, daß bei Ablösung des Fotos 5 dieses zerstört wird, und damit der Austausch gegen ein anderes Foto sichtbar wird. Unterhalb der Abdeckung 3 ist in das Oberteil 2 eine Abdeckung 11 eingesetzt, unter dem das Flüssigkristalldisplay 8 angeordnet ist. Neben dem Display bzw. der fotoabdeckung 3 sind der Sender 15 und der Empfänger 16 für die Aufnahme und Abgabe der Daten vorgesehen. Die Taste 13 dient, wie erwähnt, zur Sichtbarmachung der im Datenträger 50 enthaltenen Daten auf dem Display 8.

Auf dem Display 8 ist auch ein Nummernfeld 14 mit einer visuell lesbaren, individuellen Nummer vorgesehen, die beispielsweise eingeprägt oder aufgedruckt sein kann. Dieselbe "laufende Nummer" kann weiters auch an der Abdeckung 3 bzw. auch am Foto 5 vorgesehen werden. Das Display 8 wird in üblicher Weise auf Tastendruck über Kontakte 10 von einem Chip 9 angespeist, der auf einem Substrat angeordnet ist. Die Stromversorgung erfolgt von einer Stromquelle 7, beispielsweise einer Batterie, einer Solarzelle, usw.

In Fig. 11 ist schematisch eine Kontrollstation 70 dargestellt, die für die Verwendung zweier verschiedener Systeme ausgestattet ist. Sie besitzt ein Gehäuse 30, in deren oberem Teile eine erste Lese-Schreib-Einrichtung 31 und in deren unterem Teil eine zweite Lese-Schreib-Einrichtung 32 vorgesehen ist. Diese erste Lese-Schreib-Einrichtung 31 umfaßt eine Sende-Empfangseinheit, die für die Funkübertragung gemäß Fig. 2 ausgebildet und vorstehend bereits beschrieben ist. Für die Infrarotübertragung enthält die Sende-Empfangseinheit 15, 16 eine Sendediode 27 und eine Empfangsdiode 47, einen Infrarotfilter 45, eine Ansteuerung 35 und eine Auswerteelektronik 38, sowie die zweifärbige Ampel 33 mit einer roten und einer grünen Lampe 34. Die Sende- und Empfangsdioden 27, 47 die färbigen Lampen 34 und eine vorgesetzte Optik 36 sind in einem Aufnahmeraum 29 untergebracht, der nach außen durch eine mattierte Glasscheibe 37 abgedeckt ist.

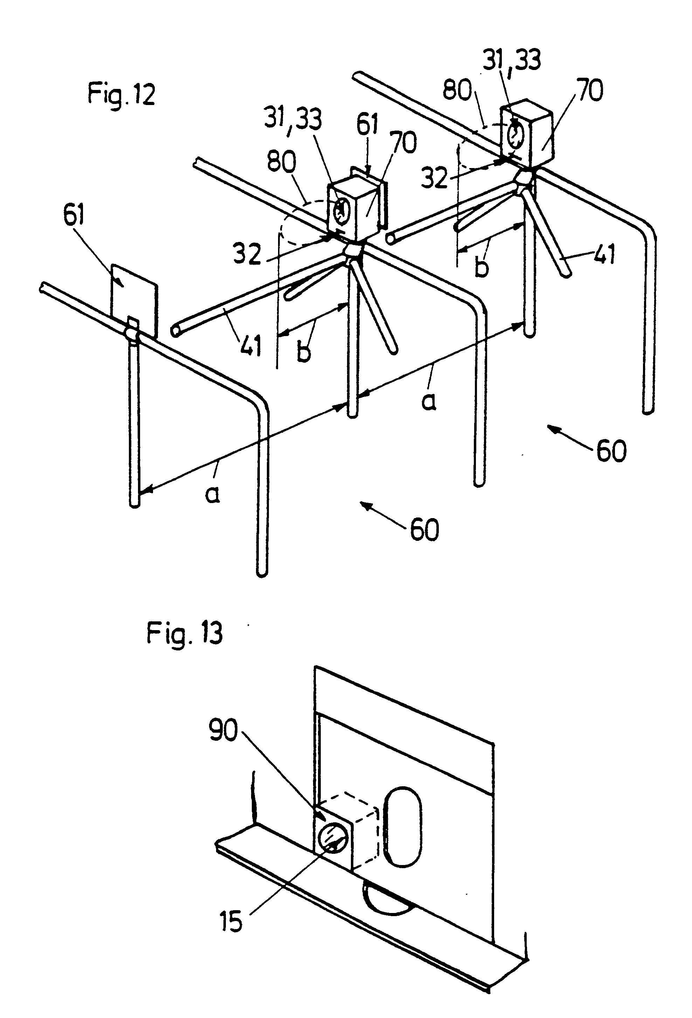

Die zweite Lese-Schreib-Einrichtung 32 dient zur Kontrolle von Datenträgern, beispielsweise für den einmaligen Zutritt, auf denen die Daten beispielsweise in magnetischer oder optischer Form gespeichert sind und die in üblicher Weise in einen Einführschlitz 42 einschiebbar sind, wobei die gespeicherten Daten von einem Schreib-Lesekopf 43 gelesen und einer Auswerteelektronik 46 zugeführt werden. An diese ist weiters ein Druckkopf 44 angeschlossen. Die je nach Art des zu prüfenden Datenträgers von der Auswerteelektronik 38, 46 abgegebenen Signale werden über einen Umschalter 39 an die Ampel 33 und angeschlossene Peripheriegeräte, wie einen Rechner, einen Schranken, ein Drehkreuz 41 usw. weitergegeben ; letzteres zeigt Fig. 12 in Beispiel einer zweispurigen Schiliftkontrollstation. In Fig. 13 ist eine Initialisierungsstation 10 in Form einer Schiliftkassa schematisch dargestellt. Die Initialisierungsstation 90 dient der Eingabe von den in der Kontrollstation 70 zu prüfenden Daten in den Schreib-Lese-Speicher 21 jedes Datenträgers 50 und weist beispielsweise zumindest einen Sender 15 auf. Die Daten könnten aber auch induktiv oder über Kontakte eingelesen werden. Hier können aber auch gebenenfalls zusätzliche Maßnahmen zur Verschlüsselung getroffen werden. Dabei wird durch ein erstes Sendesignal über die Bereitschaftslogik der Datenträger 50 aktiviert und nachfolgend sein Speicher 21 belegt. Um bei Verlust der eingespeicherten Daten (Verlust der Daten durch Stromausfall etc.) diese wieder eruieren zu können, ist die Initialisierungsstation 90 ebenfalls mit einem Speicher versehen, der als Nummernjournal dient. Das bedeutet, daß bei Initialisierung des Datenträgers 50 dessen visuell lesbare, individuelle Nummer zu den Gültigkeitsdaten des Datenträgers 50 codiert wird und sie nach der jeweiligen Nummer im Speicher der Initialisierungsstation 90 geordnet werden. Durch Abruf der Nummer können dann die Gültigkeitsdaten ermittelt werden. Da der aktive Datenträger 50 für längere und mehrfache Verwendung gedacht ist, werden bei der neuerlichen Initialisierung die früheren Daten gelöscht.

Da der Datenträger 50 den Prozessor 20 enthält, können Informationen und Funktionen nach freiem Ermessen zwischen dem Datenträger 50 und der Kontrollstation 70 aufgeteilt werden, die einander ergänzen oder gegebenenfalls auch überschneiden.

Ein wesentlicher Aspekt der erfindungsgemäßen Einrichtung besteht darin, daß der Datenträger eine Vielzahl von unterschiedlichen Berechtigungen und Werten enthalten kann. Beispielsweise sind in den Datenträgern eine Saisonskarte für Skilifte, im voraus bezahlte Werte zum Tanken von KFZ, Berechtigungen zum Benützen von Parkhäusern etc. enthalten.

Weiters kann es von Vorteil sein, wenn der Datenträger mittels einer Taste zum Aussenden einer speziellen Kennung veranlaßt werden kann. Diese Funktion kann beispielsweise zur Alarmauslösung verwendet werden, wenn der Inhaber des Datenträgers einer Gefahr ausgesetzt ist. Hiezu können z.B. in einem Parkhaus eine Anzahl von eigenen Empfängern mit größerer Empfindlichkeit in den Parkdecks vorgesehen sein, die den Alarmruf auch auf größere Enterung empfangen.

## Patentansprüche

1. Datenträger zum berührungslosen, distanzierten Datenverkehr mit mindestens einer Kontrollstation (70), die in einem Erfassungsraum (60) eine Überprüfung und/oder Änderung der Daten im Datenträger (50) vornimmt, insbesondere bei der Kontrolle einer Zutrittsberechtigung, wobei der Datenträger (50) mit Befestigungsmitteln zur Verbindung mit dem Inhaber des Datenträgers versehen ist, und einen Mikroprozessor (20), eine Stromquelle (7), eine Datensendeempfangseinheit (15, 16), einen Speicher (21), der insbesondere zur Aufnahme mehrerer, unabhängiger Berechtigungen, Werte und Identifikationsinformationen ausgebildet ist, eine Bedienungstaste (13, 65), ein elektronisches Uhrwerk, eine Zeitanzeige, sowie gegebenenfalls eine Bereitschaftsschaltung umfaßt, die über ein von der Kontrollstation (70) abgegebenes Signal aktivierbar ist, dadurch gekennzeichnet, daß der Datenträger (50) ein Digitaldisplay (8) aufweist und die Bedienungstaste (13, 65) zur wahlweisen Anzeige des Speicherinhaltes oder der Tageszeit auf dem Digitaldisplay (8) geeignet ist.

2. Datenträger nach Anspruch 1, dadurch gekennzeichnet, daß er eine Vorrichtung zur Aufnahme eines Bildes des Inhabers umfaßt.

3. Datenträger nach Anspruch 2, dadurch gekennzeichnet, daß die Vorrichtung eine transparente abnehmbare Abdeckung (3) aufweist, die innenseitig mit einer Klebstoffbeschichtung (4) versehen ist, auf die als Bild ein Foto (5) aufklebbar ist.

4. Datenträger nach Anspruch 3, dadurch gekennzeichnet, daß eine individuelle, visuell lesbare Nummer am einzusetzenden Foto (5) sowie an einem mit dem Speicher (21) verbundenen Teil (14) eingeprägt oder aufgedruckt und vorzugsweise auch in den Speicher (21) eingelesen ist.

5. Datenträger nach einem der Ansprüche 1 bis 4, dadurch gekennzeichnet, daß der Datenträger eine ein Gehäuse aufweisende Armbanduhr bildet, an dem ein Armband (12) als Befestigungsmittel vorgesehen ist.

6. Datenträger nach einem der Ansprüche 1 bis 4, dadurch gekennzeichnet, daß als Befestigungsmittel eine federbeaufschlagte Schnur (24) vorgesehen ist, die im Gehäuse ausziehbar aufgewickelt ist, und an deren Ende ein Schlüsselring (25) oder dergleichen befestigt ist.

## Claims

1. Data carrier for a non-contact, remote data communication with at least one control station (70) performing a check and/or a change of the data on the data carrier (50) within an acquisition space (60), especially for controlling the authorization of access, the data carrier (50) being provided with fastening means for the connection to the owner of the data carrier and the data carrier comprising a microprocessor (20), a power supply unit (7), a data transmission-reception unit (15, 16), a memory (21) which, particularly, is designed to store several independent authorizations, values and identification informations, an operating button (13, 65), an electronic clockwork, a time display, and possibly a stand-by circuit which can be activated by a signal emitted by the control station (70), characterized in that the data carrier (50) comprises a digital display (8) and that the operating button (13, 65) is adapted to selectively display the contents of the memory or the time of day on the digital display (8).

2. Data carrier according to claim 1, characterized in that it comprises a means for receiving a picture of the owner.

3. Data carrier according to claim 2, characterized in that said means comprises a transparent, detachable cover (3) that is provided with an adhesive coating at its inner side onto which a phot (5) may be fixed as a picture.

4. Data carrier according to claim 3, characterized in that an individual, visually readable number is impressed or printed on the photo (5) to be inserted as well as on a part (14) connected to the memory (21), and that this number is preferably also read into the memory (21).

5. Data carrier according to any claim of claims 1 to 4, characterized in that the data carrier forms a wrist watch comprising a housing on which a wristband (12) is provided as a fastening means.

6. Data carrier according to any claim of claims 1 to 4, characterized in that a spring-loaded string (24) is provided as a fastening means, wherein the string is wound up in the housing, can be pulled out, and has a key ring (25) or the like fastened to it at its end.

## Revendications

1. Support de données pour le transfert de données à distance et sans contact à l'aide d'au moins un poste de contrôle (70) qui procède, dans une zone de saisie (60), à une vérification et/ou à une modification des données renfermées par le support de données (50), notamment lors du contrôle d'une autorisation d'accès, le support de données (50) étant pourvu de moyens de fixation pour la liaison avec le détenteur de ce support de données, et englobant un microprocesseur (20), une source de courant (7), une unité (15, 16) réceptrice de données, une mémoire (21) qui est en particulier conçue pour enregistrer plusieurs habilitations, valeurs et informations d'identification indépendantes, une touche d'actionnement (13, 65), une horloge électronique, un affichage horaire, ainsi qu'éventuellement un circuit d'attente pouvant être activé par l'intermédiaire d'un signal délivré par le poste de contrôle (70), caractérisé par le fait que le support de données (50) présente un écran de visualisation numérique (8), et la touche d'actionnement (13, 65) se prête à l'affichage sélectif du contenu de la mémoire ou de l'heure sur l'écran de visualisation numérique (8).

2. Support de données selon la revendication 1, caractérisé par le fait qu'il englobe un dispositif pour enregistrer une image du détenteur.

3. Support de données selon la revendication 2, caractérisé par le fait que le dispositif comporte un capot amovible transparent (3) pourvu, à sa face interne, d'un revêtement adhésif (4) sur lequel peut être collée une photographie (5) matérialisant l'image.

4. Support de données selon la revendication 3, caractérisé par le fait qu'un numéro individuel, lisible visuellement, est empreint ou imprimé sur la photographie (5) à insérer, ainsi que sur une partie (14) reliée à la mémoire (21), et est également de préférence stocké dans la mémoire (21).

5. Support de données selon l'une des revendications 1 à 4, caractérisé par le fait que ce support de données forme une montre-bracelet, qui présente un boîtier sur lequel un bracelet (12) est prévu en tant que moyen de fixation.

6. Support de données selon l'une des revendications 1 à 4, caractérisé par le fait qu'un cordon (24) sollicité élastiquement, prévu en tant que moyen de fixation, est enroulé dans le boîtier avec faculté d'extraction, un porte-clés (25) ou élément similaire étant fixé à l'extrémité dudit cordon.

Fig. 1

Fig. 2

Fig. 3

EP 0 327 541 B1

Fig. 4

## Fig. 5

EP 0 327 541 B1'

Fig. 6

Fig. 7

Fig. 8

Fig. 9

Fig. 10

Fig. 11

Fig. 12

Fig. 13